# EUROPEAN PATENT APPLICATION

(11) **EP 4 534 864 A1**
(43) Date of publication of application: **09.04.2025**
(21) Application number: 22943830.4
(22) Date of filing: 30.09.2022
(51) Int. Cl.: F16C 17/02, H01J 35/10

(54) **ROTARY POSITIVE ELECTRODE X-RAY TUBE**

(30) Priority: 27.05.2022 JP 2022087055
(71) Applicant: Canon Electron Tubes & Devices Co., Ltd., Otawara-shi, Tochigi 324-0036 (JP)
(72) Inventor: ONOZEKI, Naoto, Otawara-shi, Tochigi 324-0036 (JP); SUGIURA, Hiroyuki, Otawara-shi, Tochigi 324-0036 (JP)
(74) Representative: Henkel & Partner mbB
(86) International application number: PCT/JP2022/036709
(87) International publication number: WO 2023/228430

(57) **Abstract**

Provided is a rotary positive-electrode X-ray tube comprising: a bearing having a fixed shaft and a rotating body, the rotating body including a positive-electrode target, a negative electrode, a cylindrical part which is capable of rotating about a rotation axis, and a connection part which is provided at one end of the cylindrical part and to which the positive-electrode target is connected; and an envelope. The rotating body includes a first cylinder and a second cylinder. The first cylinder comprises: a brazing material; a first inner circumferential surface including a bonding surface that is bonded to the cylindrical part via the brazing material; and a second inner circumferential surface that is spaced farther apart from the cylindrical part than the first inner circumferential surface in a direction orthogonal to the rotation axis. The second cylinder is fixed to the a first outer circumferential surface of the first cylinder in a region that opposes the bonding surface. When a plane which is orthogonal to the rotation axis and which passes through one end of the bonding surface on a side opposite the anode target in a direction along the rotation axis is regarded as a virtual plane, the second cylinder exists on said virtual plane.

## Description

### Technical Field

Embodiments described herein relate generally to a rotating anode X-ray tube.

### Background Art

In general, X-ray tube assemblies are used as X-ray generation sources in medical devices and industrial devices using X-rays to diagnose subjects. A rotating anode X-ray tube assembly comprising a rotating anode X-ray tube (hereinafter also referred to as a "rotating anode X-ray tube") is known as an X-ray tube assembly.

The rotating anode X-ray tube assembly comprises a rotating anode X-ray tube which emits X-rays, a stator coil, and a housing which accommodates the rotating anode X-ray tube and the stator coil. The rotating anode X-ray tube comprises a stationary shaft, a cathode which generates electrons, an anode target, a rotating unit, and an envelope. The rotating unit includes a cylindrical portion and a first cylinder (copper cylinder). It is known that the first cylinder is joined to the cylindrical portion via a brazing material.

### Citation List

### Patent Literatures

Patent Literature 1: JP H2-94343 A
Patent Literature 2: JP H11-213925 A

### Summary of Invention

### Technical Problem

Embodiments described herein aim to provide a rotating anode X-ray tube capable of suppressing occurrence of vibrations.

### Solution to Problem

According to one embodiment, there is provided a rotating anode X-ray tube comprising: an anode target; a cathode provided to face the anode target; a bearing including a rotating unit which includes a cylindrical portion rotatable about a rotation axis and formed in a cylindrical shape to extend along the rotation axis and a connecting portion provided at an end of the cylindrical portion and to which the anode target is connected, and a stationary shaft extending along the rotation axis and rotatably supporting the rotating unit; and an envelope accommodating the anode target and the cathode and fixing the stationary shaft. The rotating unit includes: a brazing material; a first cylinder formed in a cylindrical shape to extend along the rotation axis and having a first inner circumferential surface including a connecting surface connected to the cylindrical portion via the brazing material, and a second inner circumferential surface adjacent to the first inner circumferential surface and further separated from the cylindrical portion than the first inner circumferential surface in a direction orthogonal to the rotation axis; and a second cylinder formed in a cylindrical shape to extend along the rotation axis and fixed to an first outer circumferential surface of the first cylinder in an area facing the connecting surface. When a plane orthogonal to the rotation axis and passing through an end portion of the connecting surface on a side opposite to the anode target in a direction along the rotation axis of the connecting surface is defined as a virtual plane, the second cylinder exists on the virtual plane.

According to another embodiment, there is provided a rotating anode X-ray tube comprising: an anode target; a cathode provided to face the anode target; a bearing including a rotating unit which includes a cylindrical portion rotatable about a rotation axis and formed in a cylindrical shape to extend along the rotation axis and a connecting portion provided at an end of the cylindrical portion and to which the anode target is connected, and a stationary shaft extending along the rotation axis and rotatably supporting the rotating unit; and an envelope accommodating the anode target and the cathode and fixing the stationary shaft. The rotating unit includes: a brazing material; a first cylinder formed in a cylindrical shape to extend along the rotation axis and having a first inner circumferential surface including a connecting surface connected to the cylindrical portion via the brazing material, and a second inner circumferential surface adjacent to the first inner circumferential surface and further separated from the cylindrical portion than the first inner circumferential surface in a direction orthogonal to the rotation axis; and a restricting portion provided on a second outer circumferential surface of the cylindrical portion. An end surface of the first cylinder on the anode target side in a direction along the rotation axis is in contact with the restricting portion.

### Brief Description of Drawings

FIG. 1 is a cross-sectional view showing an X-ray tube assembly according to a first embodiment.
FIG. 2 is an enlarged cross-sectional view showing a part of the rotating anode X-ray tube according to the first embodiment.
FIG. 3 is an enlarged cross-sectional view showing a part of the rotating anode X-ray tube according to the first embodiment.
FIG. 4 is an enlarged cross-sectional view showing a part of the rotating anode X-ray tube according to the first embodiment.
FIG. 5 is an enlarged cross-sectional view showing a part of the rotating anode X-ray tube according to a second embodiment.
FIG. 6 is an enlarged cross-sectional view showing a part of the rotating anode X-ray tube according to a third embodiment.

Mode for Carrying Out the Invention Embodiments will be described hereinafter with reference to the accompanying drawings. The disclosure is merely an example, and proper changes within the spirit of the invention, which are easily conceivable by a person of ordinary skill in the art, are included in the scope of the invention as a matter of course. In addition, in some cases, in order to make the description clearer, the widths, thicknesses, shapes and the like, of the respective parts are schematically illustrated in the drawings, compared to the actual modes. However, the schematic illustration is merely an example, and adds no restriction to the interpretation of the invention. Besides, in the specification and drawings, the same elements as those described in connection with preceding drawings are denoted by like reference numbers, and a detailed description thereof is omitted unless necessary.

A rotating anode X-ray tube according to an embodiment will be described hereinafter with reference to the accompanying drawings.

### (First Embodiment)

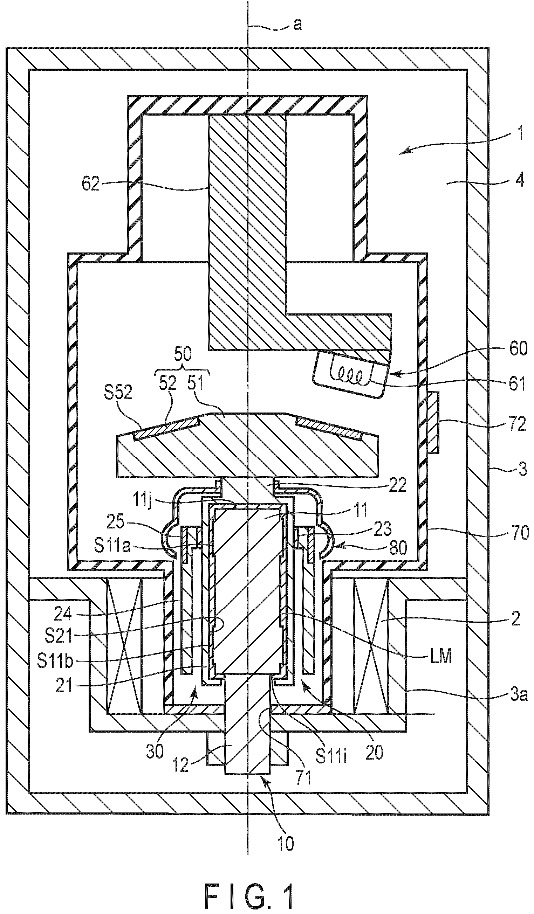

FIG. 1 is a cross-sectional view showing an X-ray tube assembly according to a first embodiment.

As shown in FIG. 1, the X-ray tube assembly comprises a rotating anode X-ray tube 1, a stator coil 2 serving as a coil for generating a magnetic field, a housing 3 housing the rotating anode X-ray tube 1 and the stator coil 2, and a coolant 4 filled in the housing 3.

The rotating anode X-ray tube 1 comprises a bearing 30, an anode target 50, a cathode 60, an envelope 70, and a heat shield plate 80. The bearing 5 includes a stationary shaft 10, a rotating unit 20, and liquid metal LM serving as a lubricant.

The stationary shaft 10 is formed in a columnar shape, extends along a rotation axis a, and has radial bearing surfaces S11a and S11b formed on the outer circumferential surface. The stationary shaft 10 rotatably supports the rotating unit 20. The stationary shaft 10 is composed of a large diameter portion 11 and a small diameter portion 12. The large diameter portion 11 and the small diameter portion 12 are formed coaxially and integrally. The stationary shaft 10 is formed of metal such as Fe (iron) alloy or Mo (molybdenum) alloy.

The large diameter portion 11 has radial bearing surfaces S11a and S11b on its outer circumferential surface. In addition, the large diameter portion 11 has a thrust bearing surface S11i at one end and a thrust bearing surface S11j at the other end. Each of the radial bearing surface S11a and the radial bearing surface S11b is formed on the outer circumferential surface of the large diameter portion over the entire circumference.

The small diameter portion 12 is formed in a columnar shape with an outer diameter smaller than that of the large diameter portion 11, and is also formed to extend from one end of the large diameter portion. The small diameter portion 12 is located on the rotation axis a side with respect to the thrust bearing surface S11i.

The rotating unit 20 is configured to be rotatable around the stationary shaft 10. The rotating unit 20 includes a cylindrical portion 21, a connecting portion 22, a brazing material 23, a first cylinder 24, and a second cylinder 25. Each of the cylindrical portion 21 and the connecting portion 22 is formed of metal such as an Fe alloy or a Mo alloy. The material of the cylindrical portion 21 and the connecting portion 22 is, for example, an iron-nickel alloy.

The cylindrical portion 21 is formed in a cylindrical shape and extends along the rotation axis a, and is located to surround the stationary shaft 10 (the large diameter portion 11). The cylindrical portion 21 is rotatable around the rotation axis a. The cylindrical portion 21 has a uniform inner diameter and outer diameter over the entire circumference, and includes a radial bearing surface S21 on the inner circumferential surface.

The connecting portion 22 is provided at one end of the cylindrical portion 21, coaxially with the cylindrical portion 21, and is connected to the anode target 50. In the first embodiment, the anode target 50 is connected to the end of the connecting portion 22 on the side opposite to the cylindrical portion 21.

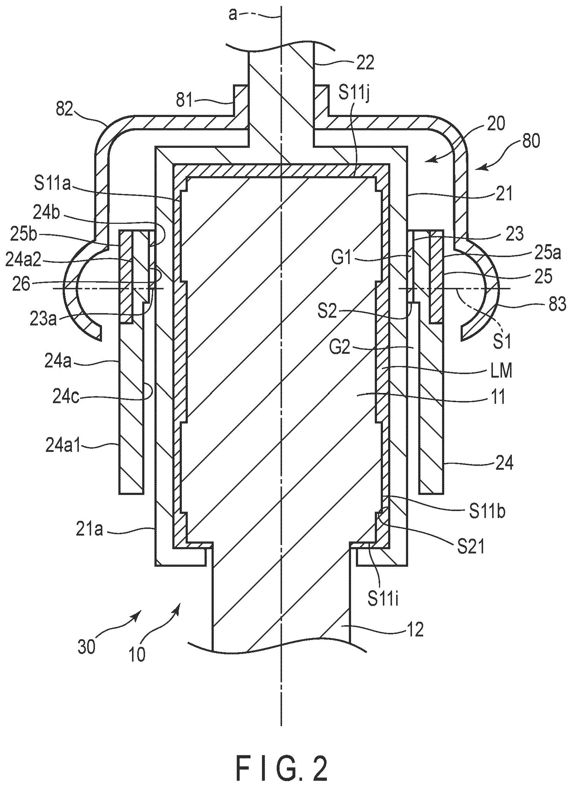

The first cylinder 24 is formed in a cylindrical shape and extends along the rotation axis a, and is joined to an outer circumferential surface of the cylindrical portion 21 (a second outer circumferential surface 21a shown in FIG. 2) via the brazing material 23. The first cylinder 24 is formed of metal such as copper (Cu) or a copper alloy.

The second cylinder 25 is formed in a cylindrical shape and extends along the rotation axis a, and is fixed to the outer circumferential surface of the first cylinder 24.

Details of the first cylinder 24 and the second cylinder 25 will be described later in descriptions on FIG. 2.

The liquid metal LM is filled in a gap between the stationary shaft 10 (large diameter portion 11) and the cylindrical portion 21. A material such as gallium indium (GaIn) alloy or a gallium indium tin (GaInSn) alloy can be used to form the liquid metal LM. The liquid metal LM forms a dynamic pressure sliding bearing together with the bearing surface of the stationary shaft 10 and the bearing surface of the rotating unit 20.

Incidentally, the bearing 5 is not limited to a structure that forms the dynamic pressure sliding bearing, but may have a structure that includes, for example, a ball bearing between the stationary shaft 10 and the rotating unit 20.

The heat shield plate 80 is fixed to the rotating unit 20, is formed in a cylindrical shape along the rotation axis a, and is located to surround the outer circumferential surface of the first cylinder 24 (a first outer circumferential surface 24a shown in FIG. 2). A gap is provided between the heat shield plate 80 and the outer circumferential surface of the first cylinder 24. The gap can be set to, for example, approximately 0.5 mm. The heat shield plate 80 blocks radiant heat from the anode target 50 to the first cylinder 24. The heat shield plate 80 is formed of, for example, Kovar (KOV).

The anode target 50 is formed in an umbrella-like substantially disk shape, and is provided coaxially with the stationary shaft 10 and the rotating unit 20. The anode target 50 includes an anode target body 51 and a target layer 52 provided on a part of the outer surface of the anode target body 51.

The anode target body 51 is formed of molybdenum, tungsten, or an alloy using these. A melting point of the metal forming the target layer 52 is the same as or higher than a melting point of the metal forming the anode target body 51. For example, the anode target body 51 is formed of a molybdenum alloy, and the target layer 52 is formed of a tungsten alloy.

The anode target 50 is rotatable together with the rotating unit 20. When electrons collide with a target surface S52 of the target layer 52, a focal spot is formed on the target surface S52. The anode target 50 thereby emits X-rays from the focal spot.

The cathode 60 is provided to face the target layer 52 of the anode target 50 at a distance from the target layer 52. The cathode 60 is attached to a support portion 62 fixed to an inner wall of the envelope 70. The cathode 60 includes a filament 61 as an electron emission source that emits electrons to irradiate the target layer 52.

The envelope 70 is formed in a cylindrical shape. The envelope 70 is formed of glass, ceramic, or a metal. In the envelope 70, an outer diameter of a portion facing the anode target 50 is larger than an outer diameter of a portion facing the first cylinder 24. The envelope 70 includes an opening 71 and an X-ray transmissive window 72 that transmits X-rays. The envelope 70 is tightly closed, accommodates the anode target 50 and the cathode 60, and fixes the stationary shaft 10. The interior of the envelope 70 is maintained in a vacuum state (reduced pressure state).

In order to maintain the air-tight state of the envelope 70, the opening 71 is air-tightly joined to one end (small diameter portion 12) of the stationary shaft 10. The envelope 70 fixes the small diameter portion 12 of the stationary shaft 10. In other words, the small diameter portion 12 functions as a single-sided support portion for the bearing 5.

The stator coil 2 is provided so as to face the outer circumferential surface of the rotating unit 20, more specifically, the outer circumferential surface of the first cylinder 24 and to surround the outside of the envelope 70. The shape of the stator coil 2 is an annular shape. The stator coil 2 generates a magnetic field applied to the first cylinder 24 (rotating unit 20) and rotates the rotating unit 20 and the anode target 50.

The housing 3 is formed in a cylindrical shape. The housing 3 is formed of, for example, a brittle material such as aluminum casting. A lead plate for blocking X-rays is bonded to an inner surface of the housing 3. The housing 3 includes a support portion 3a that supports the rotating anode X-ray tube 1 and the stator coil 2.

A coolant 4 is filled in a space between the rotating anode X-ray tube 1 and the housing 3. An insulating oil or a water-based coolant can be used as the coolant 4.

As described above, an X-ray tube assembly comprising the rotating anode X-ray tube 1 is formed.

In the operating state of the above-described X-ray tube assembly, since the stator coil 2 generates a magnetic field that is applied to the rotating unit 20 (particularly, the first cylinder 24), the cylindrical portion 21 rotates. As a result, the anode target 50 also rotates together. In addition, a current is applied to the cathode 60 and a negative voltage is applied to the cathode 60, and a relatively positive voltage is applied to the anode target 50.

A potential difference is thereby generated between the cathode 60 and the anode target 50. The filament 61 emits electrons. Electrons are accelerated to collide with the target surface S52. As a result, a focal spot is formed on the target surface S52, and the focal spot emits X-rays when colliding with the electrons. The electrons (thermoelectrons) that collides with the anode target 50 are converted into X-rays, and the rest are converted into thermal energy. Incidentally, the electron emission source of the cathode 60 is not limited to a filament, but may be, for example, a flat emitter.

The heat generated in the anode target 50 is transmitted from the target surface S52 to the inside of the target layer 52, the anode target body 51, the connecting portion 22, the cylindrical portion 21, the brazing material 23, the first cylinder 24, and the second cylinder 25 in this order. If the second cylinder 25 is not provided, the first cylinder 24 is deformed due to repetition of heat transfer as described above and natural cooling at the time when the X-ray tube assembly is not in use, and is peeled off from the cylindrical portion 21.

FIG. 2 is an enlarged cross-sectional view showing a part of the rotating anode X-ray tube according to the first embodiment.

As shown in FIG. 2, the rotating unit 20 includes the cylindrical portion 21, the connecting portion 22, the brazing material 23, the first cylinder 24, and the second cylinder 25. In addition, the heat shield plate 80 is fixed to the rotating unit 20.

The first cylinder has a first outer circumferential surface 24a, a first inner circumferential surface 24b, and a second inner circumferential surface 24c. The first outer circumferential surface 24a faces the heat shield plate 80. The first inner circumferential surface 24b includes a joint surface 26 that is joined to the second outer circumferential surface 21a of the cylindrical portion 21 via the brazing material 23. In other words, a method of joining the cylindrical portion 21 and the first cylinder 24 is brazing. In addition, in the first embodiment, the first inner circumferential surface 24b is located between the second inner circumferential surface 24c and the anode target 50 in the direction along the rotation axis a.

In the first embodiment, the first outer circumferential surface 24a is composed of a large outer circumferential surface 24a1 and a small outer circumferential surface 24a2. The small outer circumferential surface 24a2 is located on the rotation axis a side with respect to the large outer circumferential surface 24a1 in the direction orthogonal to the rotation axis a. Incidentally, the first outer circumferential surface 24a does not need to be composed of the large outer circumferential surface 24a1 and the small outer circumferential surface 24a2, but may be an outer circumferential surface having only one outer diameter centered on the rotation axis a.

The second inner circumferential surface 24c is adjacent to the first inner circumferential surface 24b and is farther from the cylindrical portion 21 than the first inner circumferential surface 24b in the direction orthogonal to the rotation axis a. The first cylinder 24 suppresses heat conduction from the first cylinder 24 to the cylindrical portion 21 by a gap (a second gap) between the second inner circumferential surface 24c and the second outer circumferential surface 21a of the cylindrical portion 21, thereby protecting the bearing surface of the rotating unit 20 and the bearing surface of the stationary shaft 10.

The second cylinder 25 is fixed to the first outer circumferential surface 24a of the first cylinder 24, is formed continuously in an annular shape in the circumferential direction centered on the rotation axis a, and has a third outer circumferential surface 25a. The coefficient of thermal expansion of the second cylinder 25 is smaller than the coefficient of thermal expansion of the first cylinder 24. In addition, the rigidity of the second cylinder 25 is greater than the rigidity of the first cylinder 24. The material of the second cylinder 25 is, for example, an iron-based material.

The second cylinder 25 is located in an area facing the joint surface 26 in the direction orthogonal to the rotation axis a. Furthermore, in the first embodiment, the second cylinder 25 is fixed to the small outer circumferential surface 24a2 of the first outer circumferential surface 24a. The third outer circumferential surface 25a of the second cylinder 25 is located on the rotation axis a side with respect to the large outer circumferential surface 24a1 in the direction orthogonal to the rotation axis a.

Incidentally, when the first outer circumferential surface 24a is not composed of the large outer circumferential surface 24a1 and the small outer circumferential surface 24a2, for example, when the first outer circumferential surface 24a is an outer circumferential surface having only one outer diameter centered on the rotation axis a, the second cylinder 25 is fixed to the first outer circumferential surface 24a. At this time, the third outer circumferential surface 25a of the second cylinder 25 is located farther away from the rotation axis a than the first outer circumferential surface 24a of the first cylinder 24 in the direction orthogonal to the rotation axis a than the first cylinder 24. A method for fixing the second cylinder 25 is, for example, diffusion bonding performed under a temperature condition lower than the melting point of the first cylinder 24.

The heat shield plate 80 is formed in a cylindrical shape and includes an upper end portion 81, a connecting portion 82, and a contact avoidance portion 83. The upper end portion 81 is an end portion of the heat shield plate 80 on the anode target 50 side in the direction along the rotation axis a. The connecting portion 82 connects the upper end portion 81 with the contact avoidance portion 83. The contact avoidance portion 83 is formed to be continuously bent over the entire circumference in a direction of separating from the first outer circumferential surface 24a. The direction of separating from the first outer circumferential surface 24a is a direction orthogonal to the rotation axis a and separating from the rotation axis a. In the first embodiment, the bending cross-sectional shape of the contact avoidance portion 83 is an arcuate shape.

The heat shield plate 80 is fixed to the rotating unit 20. More specifically, the upper end portion 81 of the heat shield plate 80 is fixed to the connecting portion 22 of the rotating unit 20. A method of fixing the heat shield plate 80 and the rotating unit 20 is, for example, tightening with screws. Incidentally, the position where the heat shield plate 80 is fixed is not limited to the connecting portion 22, but the heat shield plate may be fixed to, for example, the second outer circumferential surface 21a of the cylindrical portion 21.

Next, a positional relationship between the brazing material 23 and the second cylinder 25 will be described.

In the first embodiment, when a gap between the first inner circumferential surface 24b of the first cylinder 24 and the second outer circumferential surface 21a of the cylindrical portion 21 is referred to as a first gap G1, the brazing material 23 is provided in the first gap G1. The portion of the first inner circumferential surface 24b that is fixed to the second outer circumferential surface 21a by the brazing material 23 is referred to as the joint surface 26.

If a plane orthogonal to the rotation axis a and passing through an end portion of the joint surface 26 opposite to the anode target 50 in a direction along the rotation axis a of the joint surface 26 is defined as a virtual plane S1, the second cylinder 25 exists on the virtual plane S1. In other words, the second cylinder 25 is located penetrating the virtual plane S1.

Next, a positional relationship between the brazing material 23 and the contact avoidance portion 83 of the heat shield plate 80 will be described.

The contact avoidance portion 83 exists on the virtual plane S1. In other words, the contact avoidance portion 83 is located penetrating the virtual plane S1.

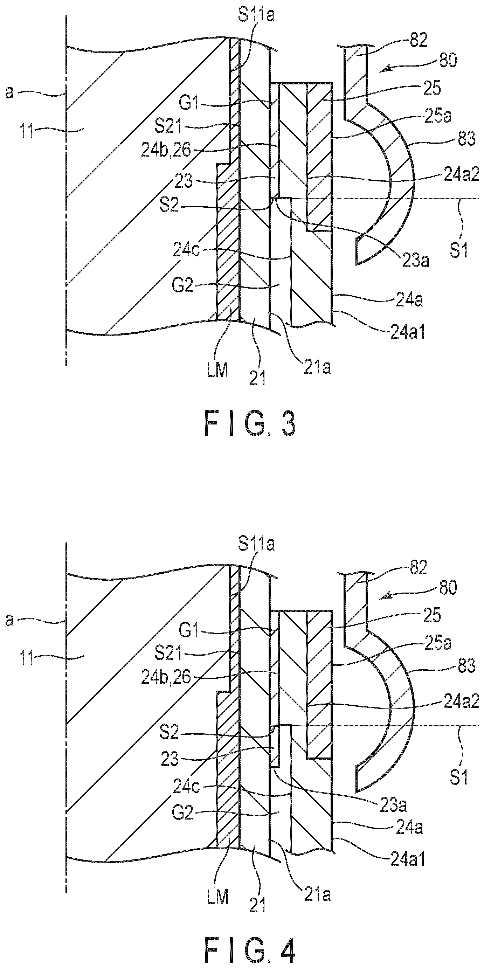

In the description of FIG. 2, the case has been described in which one end 23a of the brazing material 23 on the side opposite to the anode target 50 in the direction along the rotation axis a is fitted in the first gap G1. A case where one end 23a of the brazing material 23 is not fitted in the first gap G1 will be described with reference to FIG. 3 and FIG. 4.

FIG. 3 is an enlarged cross-sectional view showing a part of the rotating anode X-ray tube according to the first embodiment. As shown in FIG. 3, when the gap between the second inner circumferential surface 24c of the first cylinder 24 and the second outer circumferential surface 21a of the cylindrical portion 21 is defined as a second gap, and when a plane passing through a boundary between the first gap G1 and the second gap G2 and orthogonal to the rotation axis a is defined as a boundary plane, one end 23a of the brazing material 23 on the side opposite to the anode target 50 in the direction along the rotation axis a is located on a boundary plane S2. At this time, the virtual plane S1 is located on the same plane as the boundary plane S2. The second cylinder 25 and the contact avoidance portion 83 exist on the virtual plane S1 including the boundary plane S2.

FIG. 4 is an enlarged cross-sectional view showing a part of the rotating anode X-ray tube according to the first embodiment. As shown in FIG. 4, one end 23a of the brazing material 23 on the side opposite to the anode target 50 in the direction along the rotation axis a is located in the second gap G2. At this time, the virtual plane S1 is located on the same plane as the boundary plane S2. The second cylinder 25 and the contact avoidance portion 83 exist on the virtual plane S1 including the boundary plane S2.

To summarize the relationship between the brazing material 23 and the virtual plane S1, as shown in FIG. 3 and FIG. 4, one end 23a of the brazing material 23 is located on the boundary plane S2 or located in the second gap G2. At this time, the virtual plane S1 is located on the same plane as the boundary plane S2.

An advantage of the first embodiment will be described.

According to the rotating anode X-ray tube 1 according to the first embodiment configured as described above, the rotating anode X-ray tube 1 comprises the anode target 50, the cathode 60, the bearing 5 including the stationary shaft 10 and the rotating unit 20, and the envelope 70. The rotating unit 20 includes the cylindrical portion 21, the brazing material 23, the first cylinder 24 joined to the cylindrical portion 21 via the brazing material 23, and the second cylinder 25 fixed to the outer circumferential surface of the first cylinder 24. The second cylinder 25 exists on the virtual plane S1 (see FIG. 2).

When one end 23a of the brazing material 23 is located on the boundary plane S2 or in the second gap G2, the virtual plane S1 is located on the same plane as the boundary plane S2.

The second cylinder 25 is continuously formed in an annular shape, in the circumferential direction centered on the rotation axis a. Furthermore, the coefficient of thermal expansion of the second cylinder 25 is smaller than the coefficient of thermal expansion of the first cylinder 24.

As a result, peeling of the first cylinder 24 from the cylindrical portion 21, which is caused by repeating the heat generation when the anode target 50 generates X-rays and the natural cooling when the rotating anode X-ray tube 1 is not in use, can be suppressed. In other words, the rotating anode X-ray tube capable of suppressing the occurrence of vibration due to eccentricity of the rotating unit 20 with respect to the rotation axis a caused by peeling of the first cylinder 24 during the rotation of the rotating unit 20, can be obtained.

In addition, it has been confirmed that the amount of deformation of the first cylinder 24 in the direction orthogonal to the rotation axis a is about one-fourth that of the case where the second cylinder 25 is not provided.

The rotating anode X-ray tube 1 further comprises the heat shield plate 80 which is fixed to the rotating unit 20 and which blocks the radiant heat from the anode target 50 to the first cylinder 24. The heat shield plate 80 includes the contact avoidance portion 83 which is formed to be continuously bent over the entire circumference in a direction of separating from the first outer circumferential surface 24a. The contact avoidance portion 83 exists on the virtual plane S1 (see FIG. 2).

The first outer circumferential surface 24a is composed of the large outer circumferential surface 24a1 and the small outer circumferential surface 24a2, and the second cylinder 25 is located on the small outer circumferential surface 24a2. The third outer circumferential surface 25a of the second cylinder 25 is located on the rotation axis a side with respect to the large outer circumferential surface 24a1.

Contact of the first cylinder 24 with the heat shield plate 80 can be thereby suppressed. More specifically, when the rotating unit 20 is rotating, the increase in vibration caused by the first cylinder 24 coming into contact with the heat shield plate 80 can be suppressed.

### (Second Embodiment)

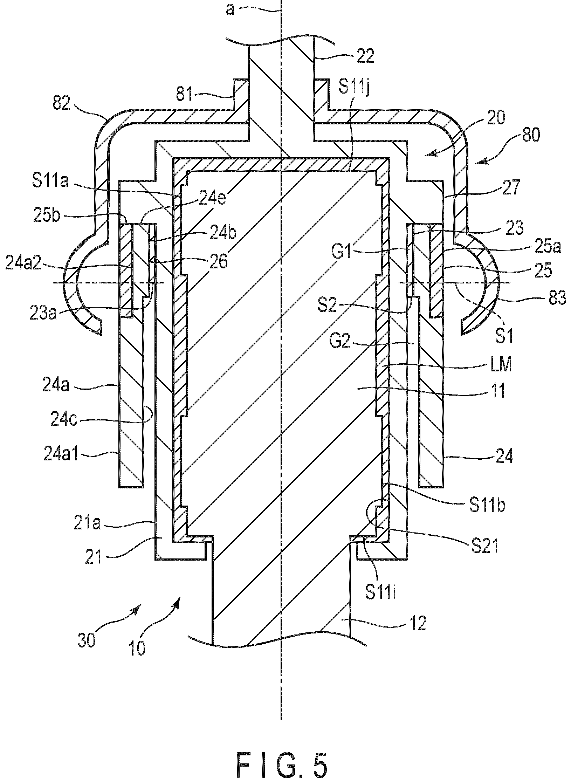

Next, a rotating anode X-ray tube 1 according to a second embodiment will be described. The rotating anode X-ray tube 1 is configured in the same manner as the first embodiment except for the configuration described in the second embodiment. FIG. 5 is an enlarged cross-sectional view showing a part of the rotating anode X-ray tube according to the second embodiment.

As shown in FIG. 5, a rotating unit 20 further includes a restricting portion 27 provided on a second outer circumferential surface 21a of a cylindrical portion 21. The rigidity of the restricting portion 27 is higher than the rigidity of a first cylinder 24. In the second embodiment, the restricting portion 27 is formed continuously and integrally with the cylindrical portion 21. Incidentally, the restricting portion 27 does not need to be formed continuously and integrally with the cylindrical portion 21, but may be joined to, for example, the second outer circumferential surface 21a of the cylindrical portion 21. The restricting portion 27 is in contact with an end surface 24e of the first cylinder 24 on the anode target side in the direction along the rotation axis a. In addition, in the second embodiment, the restricting portion 27 faces an end surface 25b of a second cylinder 25 on an anode target 50 side in the direction along the rotation axis a.

According to the rotating anode X-ray tube 1 according to the second embodiment configured as described above, the rotating unit 20 further comprises the restricting portion 27. The end surface 24e of the first cylinder 24 is in contact with the restricting portion 27. In addition, as described above, the rigidity of the restricting portion 27 is higher than the rigidity of the first cylinder 24. Therefore, when the first cylinder 24 itself is to be deformed (expanded) toward the restricting part 27, the restricting portion 27 exerts a function of pressing the first cylinder 24 against a member (cylindrical part 21) constituting the inside of the first cylinder 24. Since deformation of the first cylinder 24 can be suppressed, peeling of the first cylinder 24 from the cylindrical portion 21 can be suppressed.

The restricting portion 27 faces the end surface 25b of the second cylinder 25. The second cylinder 25 can be thereby prevented from being detached from the first cylinder 24.

### (Third Embodiment)

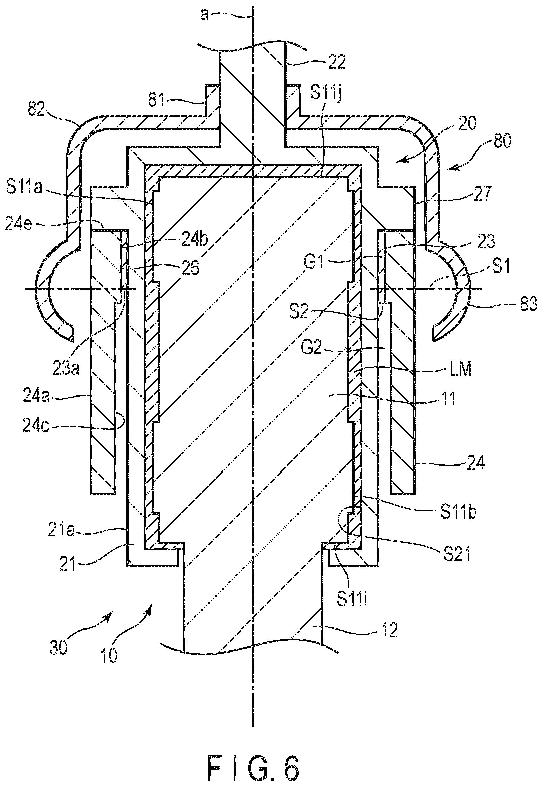

Next, a rotating anode X-ray tube 1 according to a second embodiment will be described. The rotating anode X-ray tube 1 is configured in the same manner as the second embodiment except for the configuration described in the third embodiment. FIG. 6 is an enlarged cross-sectional view showing a part of the rotating anode X-ray tube according to the third embodiment.

As shown in FIG. 6, a rotating unit 20 is configured without a second cylinder 25. A first outer circumferential surface 24a of a first cylinder 24 is not composed of a large outer circumferential surface 24a1 and a small outer circumferential surface 24a2. The first outer circumferential surface 24a is an outer circumferential surface having only one outer diameter centered on the rotation axis a. A restricting portion 27 is in contact with an end surface 24e of the first cylinder 24.

According to the rotating anode X-ray tube 1 according to the third embodiment configured as described above, the same advantage as that of the rotating anode X-ray tube according to the first embodiment can be obtained.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A rotating anode X-ray tube comprising:
an anode target;
a cathode provided to face the anode target;
a bearing including a rotating unit which includes a cylindrical portion rotatable about a rotation axis and formed in a cylindrical shape to extend along the rotation axis and a connecting portion provided at an end of the cylindrical portion and to which the anode target is connected, and a stationary shaft extending along the rotation axis and rotatably supporting the rotating unit; and
an envelope accommodating the anode target and the cathode and fixing the stationary shaft,
wherein
the rotating unit includes:
a brazing material;
a first cylinder formed in a cylindrical shape to extend along the rotation axis and having a first inner circumferential surface including a connecting surface connected to the cylindrical portion via the brazing material, and a second inner circumferential surface adjacent to the first inner circumferential surface and further separated from the cylindrical portion than the first inner circumferential surface in a direction orthogonal to the rotation axis; and
a second cylinder formed in a cylindrical shape to extend along the rotation axis and fixed to an first outer circumferential surface of the first cylinder in an area facing the connecting surface, and
when a plane orthogonal to the rotation axis and passing through an end portion of the connecting surface on a side opposite to the anode target in a direction along the rotation axis of the connecting surface is defined as a virtual plane, the second cylinder exists on the virtual plane.

2. The rotating anode X-ray tube of claim 1, wherein
when a gap between the first inner circumferential surface and a second outer circumferential surface of the cylindrical portion is referred to as a first gap, when a gap between the second inner circumferential surface and the second outer circumferential surface is referred to as a second gap, and when a plane passing through a boundary between the first gap and the second gap and orthogonal to the rotation axis is referred to as a boundary plane,
an end of the brazing material on a side opposite to the anode target in a direction along the rotation axis is located on the boundary plane between the first gap and the second gap or located in the second gap, and
the virtual plane is located on the same plane as the boundary plane.

3. The rotating anode X-ray tube of claim 2, wherein
the second cylinder is continuously formed in an annular shape, in a circumferential direction centered on the rotation axis.

4. The rotating anode X-ray tube of claim 1, wherein
the second cylinder is continuously formed in an annular shape, in a circumferential direction centered on the rotation axis.

5. The rotating anode X-ray tube of claim 4, wherein
a coefficient of thermal expansion of the second cylinder is smaller than a coefficient of thermal expansion of the first cylinder.

6. The rotating anode X-ray tube of claim 1, wherein
the rotating unit includes a restricting portion provided on a second outer circumferential surface of the cylindrical portion, and
an end surface of the first cylinder on the anode target side in a direction along the rotation axis is in contact with the restricting portion.

7. The rotating anode X-ray tube of claim 6, further comprising:
a heat shield plate fixed to the rotating unit, formed in a cylindrical shape along the rotation axis, surrounding the first outer circumferential surface, and blocking radiant heat from the anode target to the first cylinder,
wherein
the first inner circumferential surface is located between the second inner circumferential surface and the anode target in the direction along the rotation axis,
the heat shield plate includes a contact avoidance portion which is formed to be continuously bent over entire circumference in a direction of separating from the first outer circumferential surface, and
the contact avoidance portion exists on the virtual plane.

8. The rotating anode X-ray tube of claim 1, further comprising:
a heat shield plate fixed to the rotating unit, formed in a cylindrical shape along the rotation axis, surrounding the first outer circumferential surface, and blocking radiant heat from the anode target to the first cylinder,
wherein
the first inner circumferential surface is located between the second inner circumferential surface and the anode target in the direction along the rotation axis,
the heat shield plate includes a contact avoidance portion which is formed to be continuously bent over entire circumference in a direction of separating from the first outer circumferential surface, and
the contact avoidance portion exists on the virtual plane.

9. The rotating anode X-ray tube of claim 8, wherein
the first outer circumferential surface is composed of a large outer circumferential surface and a small outer circumferential surface located on the rotation axis side with respect to the large outer circumferential surface,
the second cylinder is fixed to the small outer circumferential surface, and
a third outer circumferential surface of the second cylinder is located on the rotation axis side with respect to the large outer circumferential surface.

10. A rotating anode X-ray tube comprising:
an anode target;
a cathode provided to face the anode target;
a bearing including a rotating unit which includes a cylindrical portion rotatable about a rotation axis and formed in a cylindrical shape to extend along the rotation axis and a connecting portion provided at an end of the cylindrical portion and to which the anode target is connected, and a stationary shaft extending along the rotation axis and rotatably supporting the rotating unit; and
an envelope accommodating the anode target and the cathode and fixing the stationary shaft, wherein
the rotating unit includes:
a brazing material;
a first cylinder formed in a cylindrical shape to extend along the rotation axis and having a first inner circumferential surface including a connecting surface connected to the cylindrical portion via the brazing material, and a second inner circumferential surface adjacent to the first inner circumferential surface and further separated from the cylindrical portion than the first inner circumferential surface in a direction orthogonal to the rotation axis; and
a restricting portion provided on a second outer circumferential surface of the cylindrical portion, and
an end surface of the first cylinder on the anode target side in a direction along the rotation axis is in contact with the restricting portion.

11. The rotating anode X-ray tube of claim 10, wherein
rigidity of the restricting portion is higher than rigidity of the first cylinder.
